# EUROPÄISCHE PATENTANMELDUNG

(11) **EP 0 806 579 A2**
(43) Veröffentlichungstag der Anmeldung: **12.11.1997**
(21) Anmeldenummer: 97107718.5
(22) Anmeldetag: 12.05.1997
(51) Int. Cl.: F16C 17/04, F16C 23/02

(54) **Selbsteinstellendes Axiallager**

(30) Priorität: 10.05.1996 DE 19618767
(71) Anmelder: WILO GmbH, D-44263 Dortmund (DE)
(72) Erfinder: Goronzy, Bernd, Dipl.-Ing., 44575 Castrop-Rauxel (DE); lahusen, Christoph, Dipl.-Ing., 44139 Dortmund (DE)
(74) Vertreter: COHAUSZ HASE DAWIDOWICZ & PARTNER

(57) **Zusammenfassung**

Die Erfindung betrifft ein Axiallager, insbesondere einer Spaltrohrmotorkreiselpumpe, bestehend aus einem rotierenden und einem stillstehenden Gleitlagerteil, die unterschiedliche Verschleißfestigkeit und jeweils eine seitliche Gleitfläche aufweisen, wobei die Gleitfläche des einen Gleitlagerteils zur Gleitfläche des anderen Gleitlagerteils am Außen- und/oder Innenrand oder zwischen diesen Rändern einen Abstand, insbesondere einen Spalt bildet.

## Beschreibung

Die Erfindung betrifft ein Axiallager, das zur Aufnahme von Axialkräften eingesetzt wird, die insbesondere bei Pumpenmotoren auftreten. Für Naßläufermotoren, die z.B. in Spaltrohrmotorpumpen eingesetzt werden, kommen sogenannte Gleitlager zum Einsatz, bei denen sich zwischen dem bewegten und dem ruhenden Gleitlagerteil eine flüssige Zwischenschicht befindet.

Diese Zwischenschicht bewirkt einen stabilen und weitgehend verschleißfreien Betrieb des Gleitlagers und wird durch das geförderte Mittel, das den Motorläufer umspült, selbst gebildet. Da obengenannte Pumpen meistens für die Förderung von Wasser verwendet werden, wird diese schmierende flüssige Schicht zwischen den beiden Lagerteilen durch das Wasser gebildet.

In diesem Anwendungsfall werden Gleitlager gegenüber Wälzlagern vorgezogen, weil sie sich durch hohe Belastbarkeit, große Laufruhe und nahezu verschleißfreien Betrieb auszeichnen. Darüber hinaus haben derartige Gleitlager ein kleineres Bauvolumen und einen geringeren Herstellungspreis.

In der Praxis hat es sich herausgestellt, daß unter ungünstigen Umständen die Axiallager blockieren können. Ein solcher Fall kann zum Beispiel auftreten, wenn die Pumpe längere Zeit nicht in Betrieb war und dadurch die Lager ausgetrocknet sind. Weiterhin kann es vorkommen, daß Motorschutzeinrichtungen die Pumpe bei einer erhöhten Stromaufnahme abschalten, die sich bei einer vergrößerten Lagerreibung ergibt.

Für den bisherigen Aufbau solcher Gleitlager werden üblicherweise zwei Gleitlagerteile aus verschiedenen Materialien eingesetzt, wobei eines der Materialien gegenüber dem anderen eine geringere Verschleißfestigkeit aufweist.

Als Materialien kommen hier insbesondere Keramik und Kohle zum Einsatz. Obengenannte Axiallager werden so aufgebaut, daß ein Gleitlagerteil rotiert und das andere stillsteht. Hierbei wird als rotierendes Gleitlagerteil eine Gleitscheibe aus Keramik benutzt. Das stillstehende Gleitlagerteil wird aus Kohle aufgebaut, wobei in die Gleitfläche für eine bessere Schmierung mehrere Nute in radialer Richtung eingearbeitet sein können.

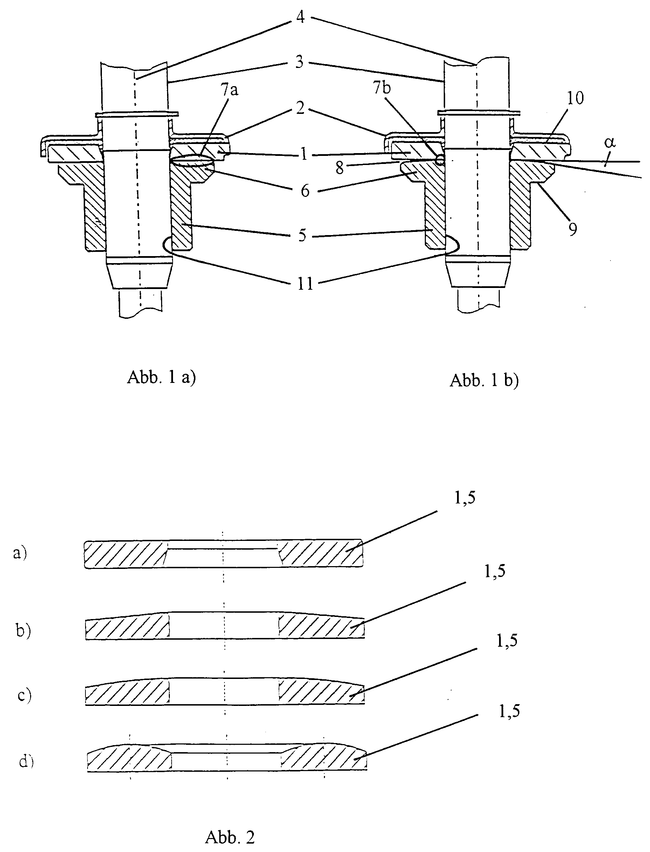

Beide eingesetzte Gleitlagerteile haben nahezu identisch große Gleitflächen die einander planparallel gegenüberliegen und sich auch während des Betriebes durch Verschleiß in Größe und Lage nicht ändern. Ein derartiges Lager ist in der Abbildung 1 a) dargestellt. Die Abbildung 2 a) zeigt im Querschnitt die als Gleitlagerteil verwendete Gleitscheibe aus Keramik, die die gleiche plane Gleitfläche aufweist, wie das Gleitlagerteil aus Kohle.

Die Blockierneigung eines Gleitlagers ist maßgeblich durch die Größe der sich berührenden Gleitflächen gegeben ist. Eine Verringerung der Blockierneigung kann daher nur durch eine Größenreduzierung dieser sich berührenden Gleitflächen erreicht werden.

Aufgabe der Erfindung ist es, ein aus zwei Gleitlagerteilen bestehendes Axiallager zu schaffen, das sich durch eine wesentlich verringerte Gleitfläche auszeichnet, die sich im Bedarfsfall bei erhöhten Axialkräften durch verschleißbedingte Vergrößerung selbsttätig auf die erforderliche Gleitflächengröße einstellt.

Diese Aufgabe wird erfindungsgemäß durch ein Axiallager nach Patentanspruch 1 gelöst. Das erfindungsgemäße Axiallager hebt sich gegenüber dem bisher verwendeten Axialager dadurch ab, daß die Gleitfläche des einen Gleitlagerteils zur Gleitfläche des anderen Gleitlagerteils am Außen- und/oder Innenrand oder zwischen diesen Rändern einen Abstand, insbesondere einen Spalt bildet.

Ein derartiges Axiallager hat den Vorteil, daß sich zwischen den sich gegenüberliegenden Gleitflächen eine kleinere Berührungsfläche ergibt als bei einen Axiallager der bisherigen Art. Wegen der hierdurch bedingten geringeren Reibung zwischen den Gleitflächen wird eine Reduzierung der Blockierneigung des Lagers erreicht. Die Verringerung der Berührungsfläche wirkt sich insbesondere dann positiv aus, wenn die Pumpe längere Zeit stillstand und das Lager ausgetrocknet ist.

Der am Außen- und/oder Innenrand der Gleitfläche gebildete Spalt bewirkt zusätzlich bei dem erfindungsgemäßen Axiallager ein leichteres Eindringen der schmierenden Flüssigkeit zwischen die Gleitflächen des Axiallagers, wodurch gegenüber dem ursprünglichen Axiallager ein insgesamt geringerer Verschleiß erreicht wird.

Vorteilhafterweise wird das Axiallager so aufgebaut, daß die Gleitflächen der beiden Gleitlagerteile vor ihrer Benutzung in einer ringförmigen Berührungslinie aneinanderliegen. Diese ringförmige Berührungslinie ist abhängig von der wirkenden Axialkraft bis auf eine maximale mögliche ringförmige Berührungsfläche durch Verschleiß selbsttätig vergrößerbar.

Hierdurch ergibt sich, daß die erfindungsgemäßen Axiallager für die unterschiedlichsten Pumpen universell einsetzbar sind, da sich je nach axialer Belastung die benötigte Berührungsfläche selbsttätig einstellt. Erst unter maximaler Belastung wird der Verschleiß so groß sein, daß sich im Betrieb des Lagers eine Berührungsfläche ergibt, die so groß ist, wie bei den ursprünglichen Axiallagern. Diese maximale Berührungsfläche ist so dimensioniert, daß selbst bei Dauerversuchspumpen kein weiterer wesentlicher Verschleiß feststellbar ist.

Bevorzugt werden die Gleitlagerteile so ausgeführt, daß eines eine geringere Verschleißfestigkeit aufweist als das andere. Insbesondere werden als Materialien Keramik und kunstharzimprägnierte Kohle gewählt. Bei dieser Materialwahl wird der beabsichtigte selbsttätige Verschleiß im wesentlichen nur bei dem aus Kohle gefertigten Gleitlagerteil stattfinden. Dementsprechend wird, wie bei dem ursprünglichen Axiallager nach dem Stand der Technik, als ein Gleitlagerteil eine rotierende plane ringförmige Gleitscheibe aus Keramik verwendet. Das feststehende Gleitlagerteil ist aus Kohle gefertigt und besitzt eine modifizierte Gleitfläche.

Bei einem derartigen Axiallager sind die Vorteile insbesondere darin zu sehen, daß die Gleitflächenbeschaffenheit so ist, wie bei dem ursprünglichen Lager, für das gute Erfahrungswerte vorliegen, die sich berührenden Flächenteile planparallel zueinander liegen, durch die Selbsteinstellung die Berührungsfläche nur die eben erforderliche Größe erreicht und dadurch die Blockierneigung reduziert wird, schlimmstenfalls eine maximale Berührungsfläche zur Verfügung steht, in der Einlaufphase des Lagers keine erhöhte Stromaufnahme meßbar ist und letztendlich ein derartiges erfindungsgemäßes Lager sehr kostengünstig herstellbar ist.

Bei dem erfindungsgemäßen Axiallager ist es vorgesehen, die Gleitfläche des Gleitlagerteils aus Kohle, bezogen auf den gesamten Durchmesser der Gleitfläche, konisch, konvex oder konkav auszubilden.

Bei der konischen Gleitfläche fällt die Materialstärke des Gleitlagerteils aus Kohle, bezogen auf die Gleitlagerrückfläche, in einer gleichmäßigen Schräge mit konstanter Steigung vom inneren Rand des Gleitlagers zum äußeren Rand ab. Hierdurch wird bewirkt, daß sich die Berührungsfläche während der Benutzung des Axiallagers durch Verschleiß von innen nach außen vergrößert.

Ebenso ist es denkbar, eine konische Gleitfläche des Kohle-Gleitlagerteils herzustellen, bei dem die Materialstärke vom inneren Rand zum äußeren Rand zunimmt. In diesem Fall wird der obengenannte Spalt zwischen den beiden Gleitflächen am inneren Rand des Lagers gebildet und die Berührungsfläche vergrößert sich von außen nach innen.

In weiteren Ausführungsformen wird die Gleitfläche des Gleitlagerteils aus Kohle z.B. mit einem großen Radius versehen, so daß sich, wiederum bezogen auf den gesamten Durchmesser, eine konvexe Gleitfläche des Lagers ergibt. Gegenüber der konischen Form der Gleitfläche hat diese Gestaltung den Vorteil, daß sich die Berührungslinie durch Verschleiß schneller auf eine größere Fläche einstellt, ohne daß sich die axiale Lage des Gleitlagerteils stark verändert. Die Lageänderung aufgrund des selbsttätigen Verschleißes liegt bei etwa 1-2 mm. Auch bei dieser Ausgestaltung bildet sich ein Spalt am äußeren Rand der Gleitfläche und die Berührungsfläche vergrößert sich durch Verschleiß von innen nach außen.

Ebenso ist es möglich die Gleitfläche konkav auszugestalten. Hier wiederum bildet sich der Spalt am inneren Rand der Gleitflächen und die Berührungsfläche vergrößert sich von außen nach innen.

Eine ebenfalls vorteilhafte Ausgestaltung des Axiallagers ist darin zu sehen, daß die Gleitfläche des Gleitlagerteils aus Kohle zwischen dem inneren Rand und dem äußeren Rand der Gleitfläche konisch, konvex oder konkav ausgebildet ist. In den ersten beiden Fällen zeigt die Gleitfläche zwischen innerem und äußerem Rand die größte Materialstärke. Bei diesen Ausgestaltungen vergrößert sich die Berührungsfläche dann in beiden Richtungen ausgehend von einer Berührungslinie. Ein Spalt wird sowohl am inneren als auch am äußeren Rand der Gleitfläche gebildet.

Im konkaven Fall ist die Materialstärke am inneren und äußeren Rand der Gleitfläche am größten und die beiden einander gegenüberliegenden Gleitflächen bilden zwischen innerem und äußerem Rand einen Abstand oder Spalt. Bei dieser Gestaltung vergrößert sich die Berührungsfläche ausgehend von zwei ringförmigen Berührungslinien.

Jede der hier vorgestellten Gleitflächengeometrien ist herstellbar. Weiterhin ist es möglich andere hier nicht vorgestellte Gleitflächengeometrien herzustellen, die ebenfalls eine örtlich variable Gleitflächendicke aufweisen.

In einer weiteren Ausführungsform des Axiallagers ist es möglich, nicht das Gleitlagerteil aus Kohle in seiner Gleitflächenform zu verändern und das Gleitlagerteil aus Keramik plan zu belassen, sondern vielmehr umgekehrt, das Gleitlagerteil aus Keramik in seiner Gleitflächengeometrie zu ändern und das verschleißende Gleilagerteil aus Kohle plan zu belassen. Für das zu ändernde Gleitlagerteil aus Keramik gelten in diesem Fall die obigen Ausführungen genauso wie für das Gleitlagerteil aus Kohle.

Weiterhin kann ein Axiallager hergestellt werden, bei dem nicht nur eines, sondern beide Gleitlagerteile eine der oben beschriebenen Gleitflächengeometrien aufweisen.

Diese verschiedenen Gleitflächengeometrien sind auch maßgeblich dafür verantwortlich, welcher Abstand sich nach dem Einlaufen des Axiallagers insbesondere zwischen den beiden Gleitlagerrückflächen einstellt und um welche Strecke sich somit z.B. der Läufer eines Motors versetzt. Wie bereits weiter oben dargelegt, muß bei der konischen Form, um eine größere Berührungsfläche zu erhalten, mehr Material abgetragen werden, als bei der konvexen durch einen Radius gegebenen Gleitfläche.

Darüber hinaus ist eine Ausführungsform des Axiallagers möglich, bei dem nicht das verschleißende Gleilagerteil stillsteht und sich das andere Gleitlagerteil dreht, sondern umgekehrt das verschleißende Gleitlagerteil sich dreht und das verschleißfestere Teil stillsteht.

Aus Kosten- und Herstellungsgründen ist die Ausführungsform zu bevorzugen, bei der die plane Form des rotierenden Gleitlagerteils aus Keramikl beibehalten wird. Hier wird also nur die Gleitfläche des stillstehenden Gleitlagerteils aus Kohle modifiziert.

Bei dieser letztgenannten Ausführungsform ergibt sich ein Einlaufverhalten des Axiallagers, das mit dem des ursprünglichen Axiallagers identisch ist, die Blockierneigung der Pumpe ist deutlich reduziert und das Lager zeigt ein verbessertes Trockenlauf- und Verschleißverhalten. Unter ungünstigsten Umständen kann sich durch die Selbsteinstellung des Axiallagers die Gleitfläche des ursprünglich verwendeten Lagers wieder einstellen.

Der Stand der Technik und ein Ausführungsbeispiel der Erfindung ist in den Zeichnungen dargestellt und wird im folgenden näher beschrieben.

Es zeigen:
- Abbildung 1 a):: einen axialen Schnitt durch das Axiallager nach dem Stand der Technik.
- Abbildung 1 b):: einen axialen Schnitt durch das Axiallager gemäß der Erfindung.
- Abbildung 2 a):: einen Querschnitt durch ein Gleitlagerteil mit planer Gleitfläche nach dem Stand der Technik.
- Abbildung 2 b):: einen Querschnitt durch ein erfindungsgemäßes Gleitlagerteil mit konischer Gleitfläche, bezogen auf den gesamten Durchmesser der Gleitfläche
- Abbildung 2 c):: einen Querschnitt durch ein erfindungsgemäßes Gleitlagerteil mit konvexer Gleitfläche, bezogen auf den gesamten Durchmesser der Gleitfläche.
- Abbildung 2 d):: einen Querschnitt durch ein erfindungsgemäßes Gleitlagerteil mit konvexer Gleitfläche zwischen innerem und äußerem Rand der Gleitfläche.

Die in den Abbildungen 1 a) und 1 b) dargestellten Axiallager bestehen aus einem ringförmigen planen Gleitlagerteil 1, das aus Keramik hergestellt ist und somit eine sehr hohe Verschleißfestigkeit aufweist. Dieses als Gleitscheibe ausgebildete Gleitlagerteil 1 ist über eine Halterung 2 mit der Welle 3 drehfest verbunden und dreht sich mit der Welle 3 um die Drehachse 4.

Als Gegenlager zu dem obengenannten Gleitlagerteil 1 wird ein buchsenförmiges Gleitlagerteil 5 verwendet, an das ein Flansch 6 angeformt ist, dessen eine seitliche Fläche die Gleitfläche des Gegenlagers bildet. Dieses Gleitlagerteil 5 wird aus kunstharzimpränierter Kohle hergestellt, die eine geringere Verschleißfestigkeit aufweist als Keramik. Das Gleitlagerteil 5 enthält eine Öffnung 11 zur spielfreien drehbaren Aufnahme der Welle 3 und wird drehfest mit einer nicht dargestellten Halterung, z.B. die einer Motorwelle, verbunden.

Bei dem Axiallager nach dem Stand der Technik, das in der Abbildung 1 a) dargestellt ist, haben beide Gleitlagerteile 1 und 5 planparallele Gleitflächen und die Berührfläche entspricht der maximalen Ringfläche 7a, die durch den inneren und äußeren Durchmesser des Kohle-Gleitlagerteils 5 gegeben ist. In der Abbildung 2 a) ist im Querschnitt die plane Gleitfläche des Keramik-Gleitlagerteils 1 bzw. des Kohle-Gleitlagerteils 2 nach dem Stand der Technik dargestellt.

Die Abbildung 1 b) zeigt ein Axiallager gemäß der Erfindung. Die Gleitfläche des Kohle-Gleitlagerteils 5 besitzt eine konische Form, bei der die Materialstärke, bezogen auf die Gleitlagerrückfläche 9, vom inneren Rand zum äußeren Rand abnimmt. Die so gebildete Gleitfläche bildet mit der planen Gleitfläche des keramischen Gleitlagerteils 1, die in einer zur Drehachse 4 senkrechten Ebene liegt, einen Winkel α von 1 bis 10 Grad, insbesondere 5 Grad.

Diese Form der Gleitfläche ist im Querschnitt in der Abbildung 2 b) dargestellt. Hierdurch bildet sich am äußeren Rand zwischen den Gleitflächen der Gleitlagerteile 1 und 5 ein Spalt 8, der ein besseres Eindringen der Schmierflüssigkeit zwischen die Gleitflächen ermöglicht.

Vor der Benutzung des erfindungsgemäßen Axiallagers liegen die beiden Gleitflächen der Gleitlagerteile 1 und 5 nur an einer ringförmigen Berührungslinie 7b aneinander. Während der Benutzung des Lagers wird sich diese Berührungslinie 7b vom inneren zum äußeren Rand der Gleitfläche zu einer ringförmigen Berührungsfläche vergrößern. Diese Vergrößerung erfolgt selbsttätig in Abhängigkeit von der axial wirkenden Kraft aufgrund eines Verschleißes der Gleitfläche des Kohle-Gleitlagerteils 5.

Die Abbildung 2 c) zeigt in einer weiteren Ausführungsform den Querschnitt eine Gleitfläche, die, bezogen auf den gesamten Durchmesser, durch einen großen Radius konvex ausgebildet ist. Gegenüber der konischen Form hat diese konvexe Form den Vorteil, daß durch den Verschleiß schneller eine größere Berührungsfläche erzielt wird und daher die relative verschleißbedingte Verschiebung der beiden Gleitlagerteile zueinander, bezogen auf die Gleitflächenrückseiten 9 und 10 geringer ausfällt.

Abbildung 2 d) zeigt den Querschnitt einer Gleitfläche, die nur zwischen dem inneren Rand und dem äußeren Rand konvex ausgebildet ist. Diese Geometrie hat im Querschnitt betrachtet zwischen beiden Lagerrändern die größte Höhe. Auch hier wird sich bei starker axialer Belastung die Berührungsfläche schneller vergrößern als bei der konischen Bauform.

## Patentansprüche

1. Axiallager, insbesondere einer Spaltrohr-Motorkreiselpumpe, bestehend aus einem rotierenden (1) und einem stillstehenden Gleitlagerteil (5), die unterschiedliche Verschleißfestigkeit und jeweils eine seitliche Gleitfläche aufweisen, **dadurch gekennzeichnet, daß** die Gleitfläche des einen Gleitlagerteils (1) zur Gleitfläche des anderen Gleitlagerteils (5) am Außen- und/oder Innenrand oder zwischen diesen Rändern einen Abstand, insbesondere einen Spalt (8) bildet.

2. Axiallager nach Anspruch 1, **dadurch gekennzeichnet, daß** die Gleitflächen vor ihrer Benutzung in mindestens einer ringförmigen Berührungslinie (7b) aneinanderliegen, die axialkraftabhängig bis auf eine maximal mögliche ringförmige Berührungsfläche durch Verschleiß selbsttätig vergrößerbar ist.

3. Axiallager nach Anspruch 1 oder 2, **dadurch gekennzeichnet, daß** das eine Gleitlagerteil (1) aus Keramik und das andere (5) aus kunstharzimprägnierter Kohle besteht.

4. Axiallager nach einem der vorherigen Ansprüche, **dadurch gekennzeichnet, daß** die seitliche Gleitfläche eines oder beider Gleitlagerteile (1) und (5) über den gesamten Durchmesser konisch, konvex oder konkav ausgebildet ist.

5. Axiallager nach einem der vorherigen Ansprüche, **dadurch gekennzeichnet, daß** die seitliche Gleitfläche eines oder beider Gleitlagerteile (1) und (5) zwischen innerem Rand und äußerem Rand der Gleitfläche konisch, konvex oder konkav ausgebildet ist.

6. Axiallager nach einem der vorherigen Ansprüche, **dadurch gekennzeichnet, daß** das stärker verschleißende Gleitlagerteil (5) stillsteht und das andere Gleitlagerteil (1) rotiert.

7. Axiallager nach einem der vorherigen Ansprüche, **dadurch gekennzeichnet, daß** das stärker verschleißende Gleitlagerteil (1) rotiert und das andere Gleitlagerteil (5) stillsteht.

8. Axiallager nach einem der vorherigen Ansprüche, **dadurch gekennzeichnet, daß** der Abstand der beiden Gleitlagerteile zueinander, insbesondere der Abstand der Gleitlagerrückflächen (9) und (10) zueinander durch die Gleitflächengeometrie der Gleitlagerteile (1) und (5) vorherbestimmbar ist.
